# EUROPEAN PATENT APPLICATION

(11) **EP 4 726 976 A1**
(43) Date of publication of application: **15.04.2026**
(21) Application number: 25207877.9
(22) Date of filing: 10.10.2025
(51) Int. Cl.: H02K 7/14, H02K 7/10, H02K 9/04, H02K 9/06, H02K 5/20, H02S 40/38, H02K 11/00, H02K 7/00

(54) **AIR COOLING SYSTEM FOR STAND-ALONE VERTICAL ELECTRICAL MOTORS**

(30) Priority: 13.10.2024 IL 31633224
(71) Applicant: Ampera Ltd, 8488949 Be'er Sheva (IL)
(72) Inventor: Perets, Moti, Be'er Sheva (IL); Aharon, Hagai, Be'er Sheva (IL)
(74) Representative: Herrero & Asociados, S.L.

(57) **Abstract**

There is provided a system having a cooling capabilities, system includes a housing (40) comprising a housing top; one or more air inlets (31, 32); a vertical electrical motor (60); a fan configured to cool the vertical electrical motor by sucking air from the one or more air inlets through a path that passes through an inner space in thermal communication with the housing top and through the vertical electrical motor; a rechargeable battery (51); a solar power supply unit (20) configured to recharge the rechargeable battery and to at least partially shield a housing top from sun radiation; a fan electrical motor (53) powered by the rechargeable battery; a controller (52) that is configured to: determine a manner of operating the fan out of (a) rotating the fan by the fan electrical motor while the fan is mechanically disengaged from the vertical electrical motor , (b) rotating the fan by the vertical electrical motor while the fan is engaged with the vertical electrical motor; and control the rotation of the fan according to the determining of the manner of operating the fan.

## Description

### BACKGROUND OF THE INVENTION

Stand alone systems have a housing that is heated by sun radiation which makes cooling of the system ineffective. Air cooling that is based on rotating a fan using an electrical motor to be cooled significantly reduces the conversion of electricity to mechanical force made by the electrical motor.

### SUMMARY

There are provided methods , non-transitory computer readable media and computerized systems as illustrated in the specification.

### BRIEF DESCRIPTION OF THE DRAWINGS

The subject matter that is regarded as the invention is particularly pointed out and distinctly claimed in the concluding portion of the specification. The invention , however , both as to organization and method of operation , together with objects , features , and advantages thereof , may best be understood by reference to the following detailed description when read with the accompanying drawing in which:
FIG. 1 illustrates an example of a system;
FIG. 2 illustrates an example of a system;
FIG. 3 illustrates an example of a system;
FIG. 4 illustrates an example of a system;
FIG. 5 illustrates an example of a method; and
FIG. 6 illustrates an example of solar panels.

### DETAILED DESCRIPTION OF THE DRAWINGS

In accordance with embodiments , a system is provided with cooling capabilities for a vertical electrical motor. The system includes a housing with a top , one or more air inlets , a vertical electrical motor , a fan to cool the electrical motor by sucking air through a path in thermal communication with the housing top, a rechargeable battery , and a solar power supply unit that recharges the battery and shields the housing top from sun radiation. The fan's electrical motor is powered by the battery. A controller determines the fan's operation mode , either by rotating the fan with its own electrical motor while disengaged from the vertical electrical motor , or by engaging and using the vertical electrical motor. The controller also controls the fan's rotation based on this determination. Additionally , a method for cooling a vertical electrical motor involves determining the fan's operation mode and controlling its rotation , where the fan's rotation draws air through the system's path. The vertical electrical motor is powered by a battery recharged by a solar power supply unit that also partially shields the housing top from sun radiation. According to an embodiment , the system also includes a non-transitory computer-readable medium that stores instructions for a controller to determine and control the fan's operation mode , ensuring effective cooling of the vertical electrical motor with power support from the solar supply unit.

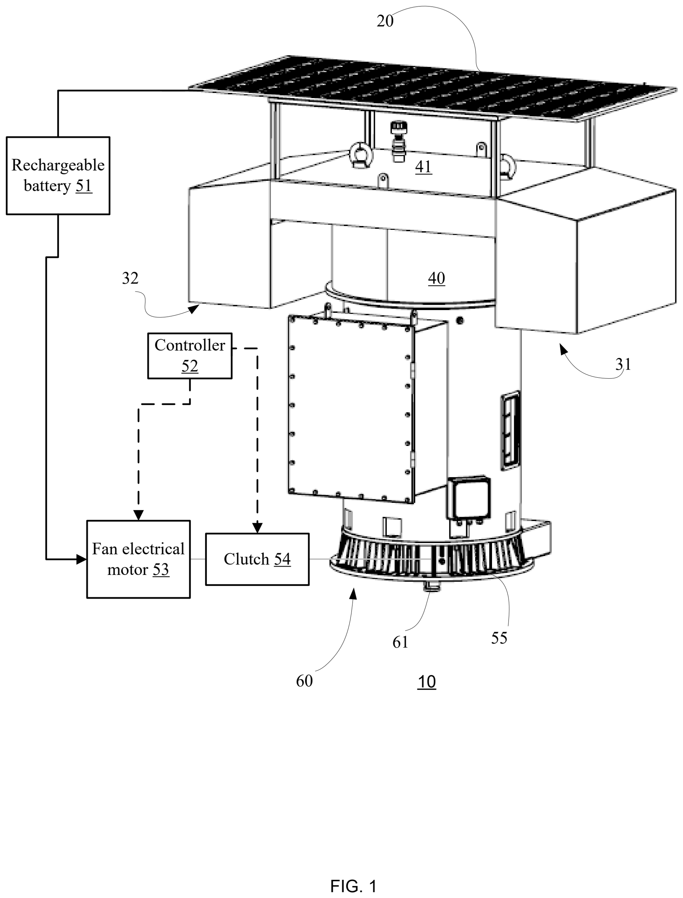

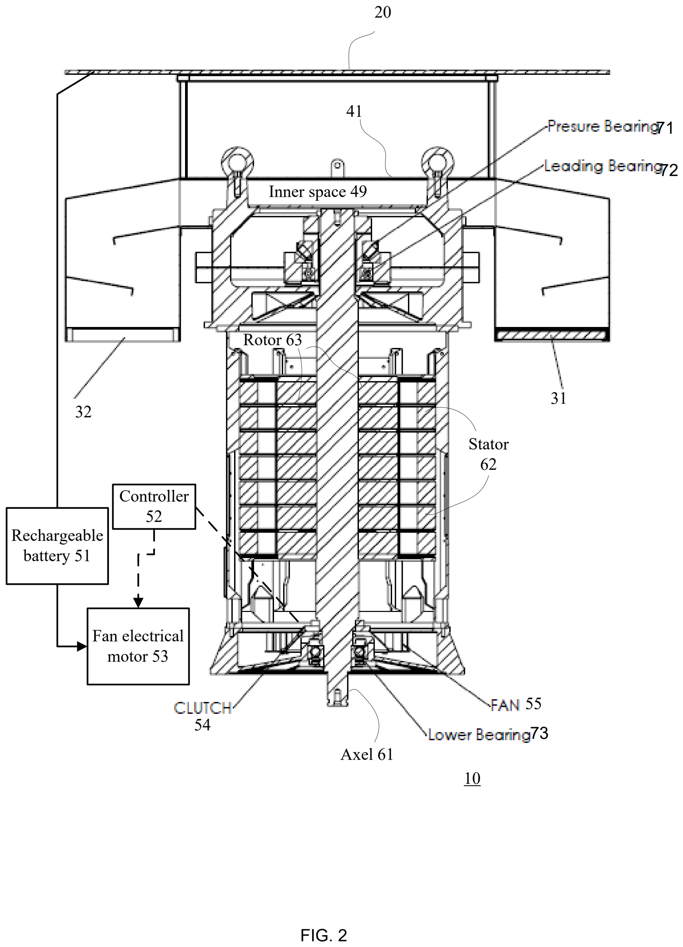

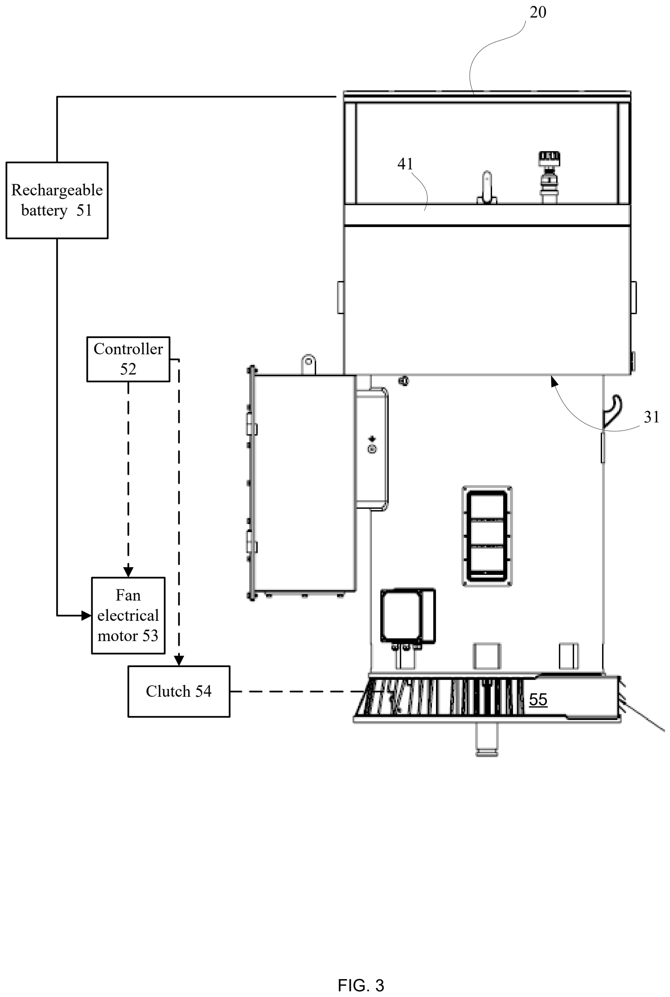

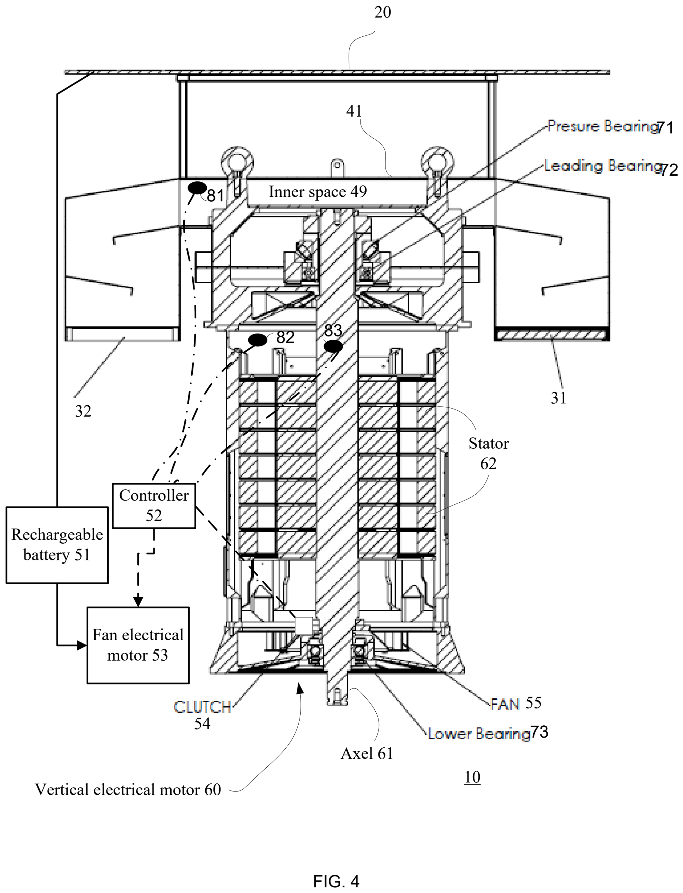

Figures 1-4 illustrates examples of one or more systems 10. The following reference numbers are being used - solar power supply unit 20 , a first air inlet 31 , a second air inlet 32 , a housing 40m a housing top 41 , inner space 49 , controller 52 , rechargeable battery 51 , fan electrical motor 53 , clutch 54 , fan 55 , axel 61 , stator 62 , rotor , vertical electrical motor 60 , sensors 81 , 82 and 83 , pressure bearing 71 , leading bearing 72 , and lower bearing 73 that that interface with axel 61.

In different embodiments , the Solar-Assisted Air-Cooled Vertical electrical motor System is designed to provide efficient cooling for a vertical electrical motor using a combination of solar power and air cooling mechanisms.

The system comprises several components and sub-components , each playing a role in the overall functionality. The housing serves as the structural support and protection for the system's internal components. It includes a housing top that is in thermal communication with the inner space of the system.

The housing is designed to enclose and protect the internal components , ensuring their proper functioning. However , the system identifies a problem with the current air cooling method , as the heated housing causes the ambient air , which is meant to cool the electrical motor , to be heated upon contact , thus reducing the effectiveness of the air cooling. The immediate heating of sucked ambient air by the housing illustrates the inefficiency of the current air cooling method , as the heated housing negates the cooling effect of the incoming air.

The system includes one or more air inlets that allow ambient air to enter the system for cooling purposes. The action of sucking ambient air is intended to cool the electrical motor by bringing in cooler external air. The vertical electrical motor is the primary component being cooled in the system.

Without effective cooling of the electrical motor, the electrical motor may heat and be damaged and/or reduce the efficiency of the electrical motor.

The fan is responsible for moving air through the system to cool the vertical electrical motor.

The fan is configured to cool the vertical electrical motor by sucking air from the one or more air inlets through a path that passes through an inner space that is in thermal communication with the housing top and through the vertical electrical motor.

The use of rotating a fan using the vertical electrical motor s is to facilitate air cooling. However , this approach significantly reduces the conversion of electricity to mechanical energy made by the electrical motor.

The rechargeable battery provides power to the fan electrical motor. The solar power supply unit harnesses solar energy to recharge the battery. It is configured to recharge the rechargeable battery and to at least partially shield the housing top from sun radiation.

The controller makes operational decisions and controls the rotation of the fan based on various conditions. It is configured to determine a manner of operating the fan out of (a) rotating the fan by the fan electrical motor while the fan is mechanically disengaged from the vertical electrical motor , (b) rotating the fan by the vertical electrical motor while the fan is engaged with the vertical electrical motor. The controller is also configured to control the rotation of the fan according to the determining of the manner of operating the fan.

The controller is also configured to determine when the rotation of the fan is required - for example when the electrical motor is inactive and/or when the temperature of the electrical motor is low enough (determined by defined rules) so that air cooling is not required - the fan may be deactivated.

The controller is also configured to determine the manner of operating the fan based on a fullness of the rechargeable battery , a temperature associated with at least one location related to the system , and a temporal power requirement from the vertical electrical motor.

The clutch allows for selective mechanical engagement between the fan and the vertical electrical motor. It is configured to selectively engage the fan to the vertical electrical motor , under the control of the controller. The vertical electrical motor is configured to rotate an axel , and the clutch is configured to mechanically engage the fan to the axel.

In summary , the Solar-Assisted Air-Cooled Vertical electrical motor System integrates various components and sub-components to achieve efficient cooling of a vertical electrical motor. The system addresses the inefficiencies of traditional air cooling methods by incorporating a solar power supply unit , a rechargeable battery , and a controller that optimizes the operation of the fan based on multiple conditions. Despite the challenges identified with the current air cooling method , the system aims to enhance the cooling efficiency and overall performance of the vertical electrical motor.

The housing in the Solar-Assisted Air-Cooled Vertical electrical motor System serves as the structural support and protection for the system's internal components. The housing includes a housing top.

There is provided a method for cooling a vertical electrical motor , as described , involves determining , by a controller of the system , a manner of operating a fan of the system out of (a) rotating the fan by a fan electrical motor of the system while the fan is mechanically disengaged from the vertical electrical motor , (b) rotating the fan by the vertical electrical motor while the fan is engaged with the vertical electrical motor ; and controlling the rotation of the fan according to the determining of the manner of operating the fan.

The controller is responsible for making operational decisions regarding the fan's functioning.

The fan can be operated in two distinct modes: (a) rotating the fan by a fan electrical motor while the fan is mechanically disengaged from the vertical electrical motor, and (b) rotating the fan by the vertical electrical motor while the fan is engaged with the vertical electrical motor. The controller's role involves determining the manner of operating the fan based on various conditions such as the fullness of the rechargeable battery or the temperature associated with at least one location related to the system. The controller's operational decision-making ensures that the fan operates efficiently to cool the vertical electrical motor. The controller also controls the rotation of the fan according to the determined manner of operation , ensuring optimal cooling performance.

The method also includes controlling the rotation of the fan according to the determining of the manner of operating the fan. The components involved in this step are the controller and the fan. The controller is responsible for operational control , determining the manner of operating the fan , and managing the operation of the fan based on certain conditions such as battery fullness or temperature. The controller's actions are for ensuring that the fan operates efficiently to cool the vertical electrical motor. The controller's role is to determine whether the fan should be rotated by the fan electrical motor while mechanically disengaged from the vertical electrical motor or by the vertical electrical motor while engaged with it. This decision-making process is for optimizing the cooling process and maintaining the system's efficiency.

The fan , configured to cool the vertical electrical motor by sucking air from the one or more air inlets through a path that passes through an inner space in thermal communication with the housing top and through the vertical electrical motor , plays a role in facilitating air cooling. The fan's action of sucking ambient air is intended to cool the electrical motor by bringing in cooler external air.

According to an embodiment there is provided a system that uses a solar power supply unit to assist in cooling a vertical engine in multiple manners - by at least partially shielding a housing top from sun radiation - and preventing air sucked into the housing to be immediately heated due to sun radiation , and by powering a rechargeable battery that power a fan electric electrical motor for rotating the fan while the fan is disengaged from the vertical electrical motor vertical electrical motor

According to an embodiment there is provided a system having a cooling capabilities , system includes a housing comprising a housing top , one or more air inlets , a vertical electrical motor , a fan configured to cool the vertical electrical motor by sucking air from the one or more air inlets through a path that passes through an inner space in thermal communication with the housing top and through the vertical electrical motor , a rechargeable battery , a solar power supply unit configured to recharge the rechargeable battery and to at least partially shield a housing top from sun radiation , a fan electrical motor powered by the rechargeable battery , and a controller.

The controller is configured to:
a. Determine a manner of operating the fan out of (a) rotating the fan by the fan electrical motor while the fan is mechanically disengaged from the vertical electrical motor, (b) rotating the fan by the vertical electrical motor while the fan is engaged with the vertical electrical motor.
b. Control the rotation of the fan according to the determining of the manner of operating the fan.

According to an embodiment , the system includes a clutch configured to selectively engage the fan to the vertical electrical motor , under a control of the controller.

According to an embodiment , the vertical electrical motor is configured to rotate an axel , and wherein the clutch is configured to mechanically engage the fan to the axel.

According to an embodiment , the controller is configured to determine the manner of operating the fan based on at least one of:
a. A fullness of the rechargeable battery.
   i. For example - if the rechargeable battery is empty - it cannot be used for powering the fan electrical motor. If the rechargeable battery can supply power only for a certain period of time - then the controller may determine whether the certain period is long enough to switch to powering the fan using the fan electrical motor.
b. A temperature associated with at least one location related to the system.
   i. Higher temperatures may require more intense cooling - which may exceed the maximal cooling provided when the fan is powered by the fan electrical motor.
   ii. Lower temperatures may indicate that the fan may provide the required cooling when powered by the fan electrical motor.
   iii. Furthermore - low enough temperatures may indicate that no cooling is required.
c. A parameter related to the vertical electrical motor such as whether the vertical electrical motor is active or idle , a temporal power requirement from the vertical electrical motor , and the like.
   i. No cooling may be required when the motor is idle.
   ii. The cooling may be applied even after the vertical electrical motor is idle - for at least a post-operation cooling period.
   iii. The vertical electrical motor may be required to temporarily operate at a lower than maximum capacity - which may amount to tolerating the reduction of effectiveness associated with rotating the fan by the vertical electrical motor.
   iv. The motor may operate at a rotational speed that is lower than a rotational speed of the fan when rotated by the fan electrical motor - which may amount to the controller selecting to rotate the fan using the fan electrical motor.

According to an embodiment , the controller is also configured determine one or more fan electrical motor parameters such as the speed of rotation of the fan by the fan electrical motor , duration of operating the fan electrical motor , whether the fan electrical motor should be operated in a continuous or non continuous manner , whether to change the rotation speed in a gradual or non-gradual manner , and the like.

According to an embodiment , the controller makes the determination also in response to an expected heating of the housing - which may be based on a time of day and/or in a year. The expected heating may be provided to the controller and/or learnt by monitoring the heat readings of one or more temperature sensors (not shown).

According to an embodiment , the temperature associated with the at least one location is a temperature of the housing top and/or a temperature of the inner space and/or a temperature of the vertical electrical motor.

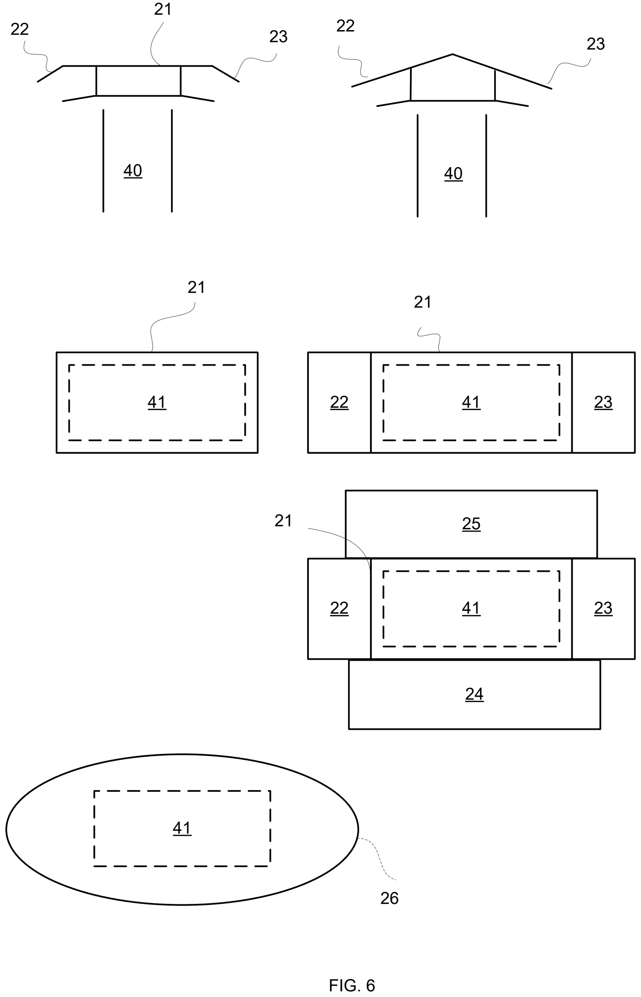

According to an embodiment, the solar power supply unit includes a solar panel that is parallel to the top of the housing. Figure 1-4 illustrates and a left top example of figure 6 illustrates the solar power supply unit as including a solar panel (denoted 21 in figure 6) that is parallel to the housing top.

According to an embodiment, the solar power supply unit includes a solar panel that is oriented to the top of the housing. Figure 6 illustrates example of solar panels 22 and 23 that re oriented to the housing top , and also illustrate additional solar panels 24 and 25 located to the side of solar panel 21. The solar panels may be of any shape - for example a rectangle or a ellipsoid 26.

According to an embodiment, the solar power supply unit includes solar panels that are oriented in relation to each other.

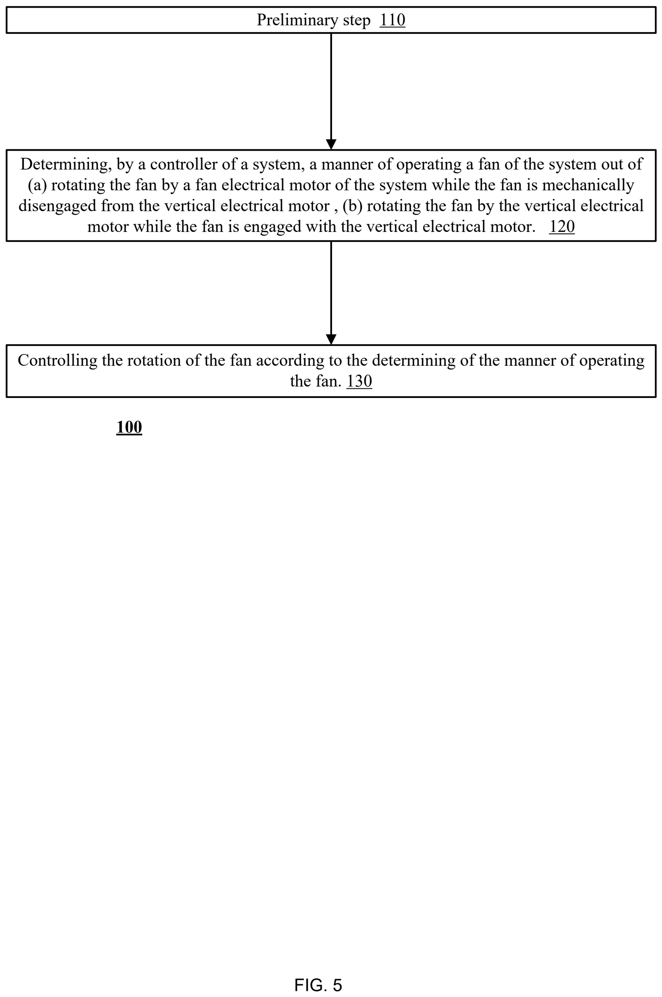

Figure 5 illustrates method 100 for cooling a vertical electrical motor.

According to an embodiment , method 100 starts by preliminary step 110. Preliminary step 110 may include converting solar energy to power used for charging the rechargeable battery and/or operating the vertical mechanical motor , and/or sensing at least one of a fullness of the rechargeable battery , measuring temperature of one or more location , and the like.

According to an embodiment , preliminary step 110 is followed by step 120 of determining , by a controller of a system , a manner of operating a fan of the system out of (a) rotating the fan by a fan electrical motor of the system while the fan is mechanically disengaged from the vertical electrical motor , (b) rotating the fan by the vertical electrical motor while the fan is engaged with the vertical electrical motor.

According to an embodiment , step 120 may also include determine not to activate the fan or to deactivate the fan.

According to an embodiment , step 120 is responsive to at least one of:
a. A fullness of the rechargeable battery.
   i. For example - if the rechargeable battery is empty - it cannot be used for powering the fan electrical motor. If the rechargeable battery can supply power only for a certain period of time - then the controller may determine whether the certain period is long enough to switch to powering the fan using the fan electrical motor.
b. A temperature associated with at least one location related to the system.
   i. Higher temperatures may require more intense cooling - which may exceed the maximal cooling provided when the fan is powered by the fan electrical motor.
   ii. Lower temperatures may indicate that the fan may provide the required cooling when powered by the fan electrical motor.
   iii. Furthermore - low enough temperatures may indicate that no cooling is required.
c. A parameter related to the vertical electrical motor such as whether the vertical electrical motor is active or idle , a temporal power requirement from the vertical electrical motor , and the like.
   i. No cooling may be required when the motor is idle.
   ii. The cooling may be applied even after the vertical electrical motor is idle - for at least a post-operation cooling period.
   iii. The vertical electrical motor may be required to temporarily operate at a lower than maximum capacity - which may amount to tolerating the reduction of effectiveness associated with rotating the fan by the vertical electrical motor.
   iv. The motor may operate at a rotational speed that is lower than a rotational speed of the fan when rotated by the fan electrical motor - which may amount to the controller selecting to rotate the fan using the fan electrical motor.

According to an embodiment , step 120 also includes determining one or more fan electrical motor parameters such as the speed of rotation of the fan by the fan electrical motor , duration of operating the fan electrical motor , whether the fan electrical motor should be operated in a continuous or non continuous manner , whether to change the rotation speed in a gradual or non-gradual manner , and the like.

According to an embodiment , step 120 is also responsive to an expected heating of the housing - which may be based on a time of day and/or in a year. The expected heating may be provided to the controller and/or learnt by monitoring the heat readings of one or more temperature sensors (not shown).

According to an embodiment , step 120 is followed by step 130 of controlling the rotation of the fan according to the determining of the manner of operating the fan.

The rotation of the fan sucks air from one or more air inlets of the system through a path that passes through an inner space in thermal communication with a housing top and through the vertical electrical motor. The fan electrical motor is powered by a rechargeable battery of the system that is powered by a solar power supply unit of the system , the solar power supply unit is configured to recharge the rechargeable battery and to at least partially shield the housing top from sun radiation.

According to an embodiment , step 130 includes selectively controlling a clutch of the system to selectively engage the fan to the vertical electrical motor.

According to an embodiment , the vertical electrical motor is configured to rotate an axel , and step 130 includes controlling a selectively mechanically engaging the fan to the axel.

Multiple iterations of steps 120 and 130 may occur over time - to dynamically control the cooling.

According to an embodiment , a minimal period may be applied between one iteration to another. The period may exceed 1 , 5 , 10 , 30 , 40 minutes.

According to an embodiment there is provided a non-transitory computer readable medium that stores instructions executable by a controller to:
a. Determine a manner of operating a fan of the system out of (a) rotating the fan by a fan electrical motor of the system while the fan is mechanically disengaged from the vertical electrical motor , (b) rotating the fan by the vertical electrical motor while the fan is engaged with the vertical electrical motor.
b. Control the rotation of the fan according to the determining of the manner of operating the fan; wherein a rotation of the fan sucks air from one or more air inlets of the system through a path that passes through an inner space in thermal communication with a housing top and through the vertical electrical motor. The fan electrical motor is powered by a rechargeable battery of the system that is powered by a solar power supply unit of the system. The solar power supply unit is configured to recharge the rechargeable battery and to at least partially shield the housing top from sun radiation.

In the foregoing detailed description , numerous specific details are set forth in order to provide a thorough understanding of the invention. However , it will be understood by those skilled in the art that the present invention may be practiced without these specific details. In other instances , well-known methods , procedures , and components have not been described in detail so as not to obscure the present invention.

The subject matter regarded as the invention is particularly pointed out and distinctly claimed in the concluding portion of the specification. The invention , however , both as to organization and method of operation , together with objects , features , and advantages thereof , may best be understood by reference to the following detailed description when read with the accompanying drawings.

It will be appreciated that for simplicity and clarity of illustration , elements shown in the figures have not necessarily been drawn to scale. For example , the dimensions of some of the elements may be exaggerated relative to other elements for clarity. Further , where considered appropriate , reference numerals may be repeated among the figures to indicate corresponding or analogous elements.

Because the illustrated embodiments of the present invention may for the most part , be implemented using microelectronics and/or optical components and circuits known to those skilled in the art , details will not be explained in any greater extent than that considered necessary as illustrated above , for the understanding and appreciation of the underlying concepts of the present invention and in order not to obfuscate or distract from the teachings of the present invention.

Any reference in the specification to a method should be applied mutatis mutandis to a system capable of executing the method.

Any reference in the specification to a system should be applied mutatis mutandis to a method that may be executed by the system.

In the foregoing specification , the invention has been described with reference to specific examples of embodiments of the invention. It will , however , be evident that various modifications and changes may be made therein without departing from the broader spirit and scope of the invention as set forth in the appended claims.

Moreover , the terms "front ," "back ," "top ," "bottom ," "over ," "under" and the like in the description and in the claims , if any , are used for descriptive purposes and not necessarily for describing permanent relative positions. It is understood that the terms so used are interchangeable under appropriate circumstances such that the embodiments of the invention described herein are , for example , capable of operation in other orientations than those illustrated or otherwise described herein.

Any arrangement of components to achieve the same functionality is effectively "associated" such that the desired functionality is achieved. Hence , any two components herein combined to achieve a particular functionality may be seen as "associated with" each other such that the desired functionality is achieved , irrespective of architectures or intermedial components. Likewise , any two components so associated can also be viewed as being "operably connected ," or "operably coupled ," to each other to achieve the desired functionality.

However , other modifications , variations and alternatives are also possible. The specifications and drawings are , accordingly , to be regarded in an illustrative rather than in a restrictive sense.

In the claims , any reference signs placed between parentheses shall not be construed as limiting the claim. The word 'comprising' does not exclude the presence of other elements or steps then those listed in a claim. Furthermore , the terms "a" or "an ," as used herein , are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element , even when the same claim includes the introductory phrases "one or more" or "at least one" and indefinite articles such as "a" or "an." The same holds true for the use of definite articles. Unless stated otherwise , terms such as "first" and "second" are used to arbitrarily distinguish between the elements such terms describe. Thus , these terms are not necessarily intended to indicate temporal or other prioritization of such elements. The mere fact that certain measures are recited in mutually different claims does not indicate that a combination of these measures cannot be used to advantage.

While certain features of the invention have been illustrated and described herein , many modifications , substitutions , changes , and equivalents will now occur to those of ordinary skill in the art. It is , therefore , to be understood that the appended claims are intended to cover all such modifications and changes as fall within the true spirit of the invention.

## Claims

1. A system having a cooling capabilities , system comprising:
a housing comprising a housing top;
one or more air inlets;
a vertical electrical motor ;
a fan configured to cool the vertical electrical motor by sucking air from the one or more air inlets through a path that passes through an inner space in thermal communication with the housing top and through the vertical electrical motor ;
a rechargeable battery;
a solar power supply unit configured to recharge the rechargeable battery and to at least partially shield a housing top from sun radiation;
a fan electrical motor powered by the rechargeable battery;
a controller that is configured to:
determine a manner of operating the fan out of (a) rotating the fan by the fan electrical motor while the fan is mechanically disengaged from the vertical electrical motor , (b) rotating the fan by the vertical electrical motor while the fan is engaged with the vertical electrical motor; and
control the rotation of the fan according to the determining of the manner of operating the fan.

2. The system according to claim 1 , comprising a clutch configured to selectively engage the fan to the vertical electrical motor , under a control of the controller.

3. The system according to claim 2 , wherein the vertical electrical motor is configured to rotate an axel , and wherein the clutch is configured to mechanically engage the fan to the axel.

4. The system according to claim 1 , wherein the controller is configured to determine the manner of operating the fan based on a fullness of the rechargeable battery.

5. The system according to claim 1 , wherein the controller is configured to determine the manner of operating the fan based on a temperature associated with at least one location related to the system.

6. The system according to claim 6 , wherein the temperature associated with the at least one location is a temperature of the housing top.

7. The system according to claim 6 , wherein the temperature associated with the at least one location is a temperature of the inner space.

8. The system according to claim 6 , wherein the temperature associated with the at least one location is a temperature of the vertical electrical motor.

9. The system according to claim 1 , wherein the controller is configured to determine the manner of operating the fan based on a fullness of the rechargeable battery and on a temperature associated with at least one location related to the system.

10. The system according to claim 1 , wherein the controller is configured to determine the manner of operating the fan based on a temporal power requirement from the vertical electrical motor.

11. The system according to claim 1 , wherein the solar power supply unit comprises a solar panel that is parallel to the top of the housing.

12. The system according to claim 1 , wherein the solar power supply unit comprises a solar panel that is oriented to the top of the housing.

13. The system according to claim 1 , wherein the solar power supply unit comprises solar panels that are oriented in relation to each other.

14. A method for cooling a vertical electrical motor , the method comprises:
determining , by a controller of a system , a manner of operating a fan of the system out of (a) rotating the fan by a fan electrical motor of the system while the fan is mechanically disengaged from the vertical electrical motor , (b) rotating the fan by the vertical electrical motor while the fan is engaged with the vertical electrical motor ; and
controlling the rotation of the fan according to the determining of the manner of operating the fan; wherein a rotation of the fan sucks air from one or more air inlets of the system through a path that passes through an inner space in thermal communication with a housing top and through the vertical electrical motor ; wherein the fan electrical motor is powered by a rechargeable battery of the system that is powered by a solar power supply unit of the system , the solar power supply unit is configured to recharge the rechargeable battery and to at least partially shield the housing top from sun radiation.

15. A non-transitory computer readable medium that stores instructions executable by a controller to:
determine a manner of operating a fan of the system out of (a) rotating the fan by a fan electrical motor of the system while the fan is mechanically disengaged from the vertical electrical motor, (b) rotating the fan by the vertical electrical motor while the fan is engaged with the vertical electrical motor ; and
control the rotation of the fan according to the determining of the manner of operating the fan; wherein a rotation of the fan sucks air from one or more air inlets of the system through a path that passes through an inner space in thermal communication with a housing top and through the vertical electrical motor ; wherein the fan electrical motor is powered by a rechargeable battery of the system that is powered by a solar power supply unit of the system , the solar power supply unit is configured to recharge the rechargeable battery and to at least partially shield the housing top from sun radiation.
